# EUROPÄISCHE PATENTSCHRIFT

(11) **EP 0 823 040 B1**
(45) Veröffentlichungstag und Bekanntmachung des Hinweises auf die Patenterteilung: **18.07.2001**
(21) Anmeldenummer: 96909961.3
(22) Anmeldetag: 16.04.1996
(51) Int. Cl.: G01J 3/28

(54) **SPEKTROSKOPIEVERFAHREN UND HIERFÜR GEEIGNETES SPEKTROMETER**
SPECTROSCOPIC PROCESS AND SUITABLE SPECTROMETER THEREFOR
PROCEDE DE SPECTROSCOPIE ET SPECTROMETRE CONVENANT A SA MISE EN UVRE

(30) Priorität: 24.04.1995 DE 19514439
(43) Veröffentlichungstag der Anmeldung: 11.02.1998
(73) Patentinhaber: Qualico Entwicklungs- und Beratungsgesellschaft für Chemische Qualitätskotrolle mbH, 52068 Aachen (DE)
(72) Erfinder: ISCHDONAT, Thomas, D-52070 Aachen (DE); SCHUMACHER-HAMEDAT, Ursula, D-52070 Aachen (DE); HUSEMANN, Thomas, D-52068 Aachen (DE)
(74) Vertreter: Bauer, Wulf, Dr.
(86) Internationale Anmeldenummer: DE9600662
(87) Internationale Veröffentlichungsnummer: WO9634257

(56) Entgegenhaltungen:
- US-A- 3 897 155
- US-A- 4 158 505

## Beschreibung

Die vorliegende Erfindung betrifft ein Spektroskopieverfahren, das insbesondere für das nahe Infrarot (IR) geeignet ist. Aus US-A-4 158 505 ist ein Spektroskopieverfahren, das einen Detektor in Form eines Photodiodenarrays verwendet, bekannt. Bei diesem Verfahren wird die von einer Probe kommende Strahlung spektral zerlegt und mit dem so erhaltenen Spektrum der Detektor beleuchtet und dessen Signal ausgewertet. Zur Erzeugung von Dunkelphasen und Hellphasen wird der Strahlengang mittels eines Choppers periodisch unterbrochen. Es wird mindestens ein Meßzyklus durchgeführt und die Meßwerte einer vom Signal des Detektors eindeutig abhängigen Meßgröße werden sowohl während der Dunkelphase als auch während der Hellphase bestimmt.

Aus US-A-3 897 155 ist ein Spektrometerverfahren bekannt, bei dem nur in den Hellphasen oder nur in den Dunkelphasen gemessen wird. Als Detektor werden Photomultiplier eingesetzt. Ein Chopper mit vorgegebener Frequenz unterbricht das von einer Lichtquelle kommende Licht periodisch.

Es ist bekannt, fotoleitfähige Halbleiter unter Ausnutzung der Abhängigkeit ihres Leitfähigkeitswertes von der einfallenden Strahlungsintensität als Detektormaterial in Spektrometern einzusetzen. Dabei wird ein solcher Detektor (Fotowiderstand) in der Regel in Reihe mit einem Kondensator einer Gleichspannung ausgesetzt, wobei dann in Abhängigkeit von der einfallenden Strahlungsintensität und der Meßzeit der Kondensator zu einem gewissen Maß aufgeladen wird. Die nach der Meßzeit am Kondensator abgreifbare Spannung ist dann die Meßgröße.

Die Infrarotspektroskopie findet eine bevorzugte Anwendung bei der Detektion und mengenmäßigen Bestimmung von Inhaltsstoffen in gasförmigen, flüssigen und festen Materialien, wobei zur Analyse die Wechselwirkung der eingesetzten IR-Strahlung mit der Wärmebewegung der Moleküle der gesuchten Inhaltsstoffe genutzt wird. Diese Wechselwirkung ist maximal bei einem Wellenlängenbereich von 1,5 µm bis 2,5 µm, da die dementsprechende Strahlungsfrequenz mit der typischen Frequenz der Kombinationsschwingungen und der ersten Obertonschwingungen der Moleküle übereinstimmt.

Derzeit sind als diesen Wellenlängenbereich abdeckende fotoleitfähige Halbleitermaterialien PbS und PbSe bekannt. Bei der Verwendung solcher Fotowiderstände in der Spektroskopie können sich insbesondere aus zwei Gründen Probleme ergeben. Zum einen ist die Leitfähigkeit dieser Materialien empfindlich von der Temperatur abhängig. Deshalb werden die Fotowiderstände in der Regel mittels Peltierkühlung auf möglichst konstanter Temperatur von z. B. knapp unter 0° C gehalten, wodurch allerdings eine Temperaturdrift am Detektorelement nicht auszuschließen ist. Zum anderen können die durch Strahlung erzeugten Ladungsträger nicht durch einfaches Kurzschließen der Fotowiderstände rekombiniert werden, weshalb die Fotowiderstände ein "Gedächtnis" für den Vorbelichtungszustand aufweisen. Aus letzterem ergibt sich, daß gleiche Beleuchtungsstärken bei ein und demselben Detektor in Abhängigkeit vom Vorbelichtungszustand unterschiedliche Leitfähigkeitswerte erzeugen können.

Zur Vermeidung des Einflusses des Vorbelichtungszustandes kann die auf einen fotoleitfähigen Halbleiterdetektor auffallende Strahlung periodisch elektronisch oder mechanisch unterbrochen werden, so daß abwechselnd Hellphasen und Dunkelphasen vorliegen. Die Dunkelphase dient dabei zur regelmäßigen Erzeugung eines Bezugsgrundzustandes.

Es ist bekannt, für die periodische Unterbrechung der Strahlung mechanische Chopper mit konstanter Umdrehungsfrequenz zu verwenden. Gleichzeitig mit der periodischen Strahlungsunterbrechung werden beim bekannten Verfahren die Detektoren mit einer um ein vielfaches höheren Frequenz ausgelesen. Hierdurch erhält man also eine Anzahl von Messungen innerhalb einer Dunkelphase, eine weitere Anzahl im Übergangsbereich zwischen Dunkel- und Hellphase sowie eine Anzahl von Messungen in der Hellphase usw., so daß sich über mehrere Umdrehungen des Choppers betrachtet ein wellenförmiges Meßwerteprofil ergibt. Durch einen Vergleich der Meßgrößen in der Hellphase mit denen in der Dunkelphase kann dann die auf den Detektor einfallende Strahlungsintensität in der Hellphase bestimmt werden.

Dieses Verfahren hat insbesondere den Nachteil, daß zum einen zur Bestimmung der gesuchten Meßgröße über mehrere Hell-/Dunkelwechsel hinweg gemessen werden muß. Die Meßgenauigkeit steigt dabei mit der Anzahl der Messungen. Somit sind der Schnelligkeit des bekannten Verfahrens aufgrund der hohen Anzahl von Messungen zur Bestimmung der Strahlungsintensität Grenzen gesetzt. Änderungen der Strahlungsintensität innerhalb des Zeitraumes von mehreren Einzelmessungen können demnach nicht detektiert werden.

Es ist nun Aufgabe der vorliegenden Erfindung, ein Verfahren der eingangs genannten Art aufzuzeigen, das zum einen den Einfluß einer Temperaturdrift des Detektorelementes auf die Messungen erheblich reduziert und zum anderen eine hohe Meßgeschwindigkeit ermöglicht.

Diese Aufgabe wird bei dem Verfahren der eingangs genannten Art gelöst durch die Merkmale des Verfahrensanspruchs 1, weiterhin wird die Aufgabe vorrichtungsmäßig gelöst durch ein Spektrometer mit den Merkmalen des Patentanspruchs 5.

Eine solche Synchronisation hat zur Folge, daß keine Meßzeiten vorliegen, die z. B. während der Hellphase beginnen und in der Dunkelphase enden. Somit hat man die Möglichkeit, reine Hellphasenmessungen mit reinen Dunkelphasenmessungen zu vergleichen. Da die Dunkelphase in einem Detektorelement einen Bezugsgrundzustand schafft, kann durch den Vergleich der in der Dunkelphase ermittelten Meßgröße mit der in der darauffolgenden Hellphase ermittelten Meßgröße direkt die Intensität der in der Hellphase auf das Detektorelement auftreffenden Strahlung bestimmt werden. Somit wird mit jeder Hellphase eine komplette Messung abgeschlossen, wodurch die Messungen mit sehr hoher Frequenz durchgeführt werden können. Hierdurch können auch Schwankungen in der Strahlungsintensität festgestellt werden, die zwischen zwei aufeinanderfolgenden Hellphasen auftreten. Desweiteren wird die Empfindlichkeit des Verfahrens gegenüber einer Temperaturdrift des Detektorelementes erheblich reduziert.

Das erfindungsgemäße Verfahren kann auch so ausgeführt werden, daß jede Meßzeit frühestens nach Ablauf eines bestimmten Anfangsreservezeitraumes nach Einsetzen der Hell- bzw. Dunkelphase beginnt und spätestens vor Beginn eines bestimmten Endreservezeitraumes vor Ende der Hell- bzw. Dunkelphase endet.

Hierdurch wird sichergestellt, daß die Messung nicht durch die Beleuchtungszustände beim Übergang zwischen Hell- und Dunkelphase bzw. zwischen Dunkel- und Hellphase beeinflußt wird. Beginn und Ende einer Dunkel- bzw. Hellphase können z.B. durch eine bestimmte Stellung des Choppers oder eines sonstigen Strahlunterbrechers definiert werden, wobei eine Hellphase unmittelbar einer Dunkelphase folgt und umgekehrt.

Das erfindungsgemäße Verfahren kann auch so ausgeführt werden, daß zur Synchronisation der Strahlungsunterbrechung mit den Meßzeiten Frequenz und Phase der Strahlungsunterbrechung sowie die Anfangs- und Endzeitpunkte der Meßzeiten durch eine Steuereinheit vorgegeben werden.

Die Synchronisation der einzelnen Verfahrensschritte wird erleichtert, indem eine Steuereinheit sämtliche Verfahrensabläufe steuert und die Zeitpunkte für die einzelnen Verfahrensschritte vorgibt. Hierdurch wird z.B. vermieden, daß der gesamte Verfahrensablauf an eine vorgegebene konstante Frequenz der Strahlungsunterbrechung angepaßt werden muß.

Das erfindungsgemäße Verfahren kann auch so ausgeführt werden, daß nach Ablauf der Meßzeit die Meßwerte jedes Detektors zunächst je einem sample-and-hold-Glied zugeführt und dort zwischengespeichert und die sample-and-hold-Glieder während einer späteren Meßzeit sequentiell ausgelesen werden.

Dieser Verfahrensschritt wirkt sich insbesondere bei der Verwendung von Detektorzeilen mit einer größeren Anzahl von Detektorelementen vorteilhaft aus. Üblicherweise werden beim Vorhandensein mehrerer Detektorelemente diese sequentiell ausgelesen. Dieser Vorgang kostet Zeit, weshalb entweder die Meßzeit verkürzt oder aber die Dunkel- bzw. Hellphasen verlängert werden müssen. Um dies zu vermeiden, werden die Meßwerte jedes Detektors am Ende der Meßzeit je einem sample-and-hold-Glied zugeführt. Hierbei handelt es sich um einen Zwischenspeicher, der unmittelbar nach Zuführung eines Meßwertes vom Detektor abgekoppelt wird, so daß letzterer sofort wieder einer weiteren Messung zur Verfügung steht. Im Verlauf dieser weiteren Messung werden dann die sample-and-hold-Glieder sequentiell ausgelesen, wodurch kein Zeitverlust für die Messung entsteht.

Es ist vorteilhaft, das erfindungsgemäße Verfahren so auszuführen, daß zur Synchronisation der Strahlungsunterbrechung mit den Meßzeiten Frequenz und Phase der Strahlungsunterbrechung sowie die Anfangs- und Endzeitpunkte der Meßzeiten durch eine Steuereinheit vorgegeben werden.

Zur Durchführung des erfindungsgemäßen Verfahrens dient ein Spektrometer mit einer Spektraleinheit zur spektralen Zerlegung der von einer Probe ausgehenden Strahlung, einer aus mindestens einem fotoleitfähigen Halbleiterdetektorelement bestehenden Detektoreinheit, einem zwischen Probe und Detektoreinheit befindlichen, den Strahlengang periodisch unterbrechenden und damit auf der Detektoreinheit Hell- und Dunkelphasen erzeugenden mechanischen Chopper und einer Phase und Frequenz des Choppers sowie Beginn und Ende jeder Meßzeit vorgehenden Steuereinheit.

Je definierter der Strahlengang verläuft und je dünner das Strahlenbündel ist, desto präziser können die Hell- und Dunkelphasen durch eine mechanische Strahlengangunterbrechung erzeugt werden. Es ist daher vorteilhaft, das erfindungsgemäße Spektrometer so auszubilden, daß es einen zwischen Probe und Chopper den Strahlengang führenden Lichtleiter aufweist.

Das erfindungsgemäße Spektrometer kann auch vorteilhaft ausgebildet sein durch einen im Strahlengang vor der Spektraleinheit befindlichen, als Blende dienenden optischen Spalt, dessen Flächenmaße nicht größer als die entsprechenden Flächenmaße der Detektorelemente sind.

Hierdurch wird die Querschnittsfläche des Strahlenganges entsprechend der Größe der Detektorelemente begrenzt, damit ein bestimmter Wellenlängenbereich eindeutig einem Detektorelement zugeordnet werden kann.

Mit der Steuereinheit werden Phase und Frequenz des Choppers geregelt. Dies kann dadurch erfolgen, daß die Steuereinheit als Sollwert ein digitales Signal setzt, zu dessen Zeitpunkt der Chopper eine bestimmte Stellung einnehmen soll. Die tatsächliche Stellung des Choppers, der Istwert der Regelung, kann z.B. mit Hilfe der von der Probe kommenden Strahlung bestimmt werden. Diese Vorgehensweise hat allerdings den Nachteil, daß dadurch die das Detektorelement erreichende Strahlungsintensität gemindert und somit für die Messung eine Qualitätseinbuße in Kauf genommen wird.

Dieser Nachteil kann vermieden werden, wenn das erfindungsgemäße Spektrometer ein die Phase des Choppers feststellendes Sensorelement aufweist.

Bei Verwendung geeigneter Materialien für die Chopperscheiben könnte das erfindungsgemäße Spektrometer so ausgebildet sein, daß das Sensorelement ein induktiver Näherungssensor ist.

Bei beliebigen Materialien der Chopperscheiben kann das erfindungsgemäße Spektrometer auch so ausgebildet sein, daß das Sensorelement eine Reflexlichtschranke ist. Vorzugsweise kann hierfür Licht aus dem grünen sichtbaren Bereich verwendet werden.

Das verwendete Sensorelement wird bezüglich der Drehachse des Choppers um einen bestimmten Winkel zum Strahlengang versetzt angebracht.

Weitere vorteilhafte Ausbildungsformen der erfindungsgemäßen Vorrichtungen sind durch die weiteren abhängigen Ansprüche gegeben.

Anhand von Figuren wird im folgenden eine bevorzugte Ausbildungsform des erfindungsgemäßen Spektrometers sowie eine bevorzugte Ausführungsform des erfindungsgemäßen Verfahrens dargestellt.

### Es zeigt:

- Fig. 1.: eine schematische Darstellung des erfindungsgemäßen Spektrometers und
- Fig. 2: ein Diagramm zur Darstellung der zeitlichen Abfolge der von der Steuereinheit ausgehenden Signale.

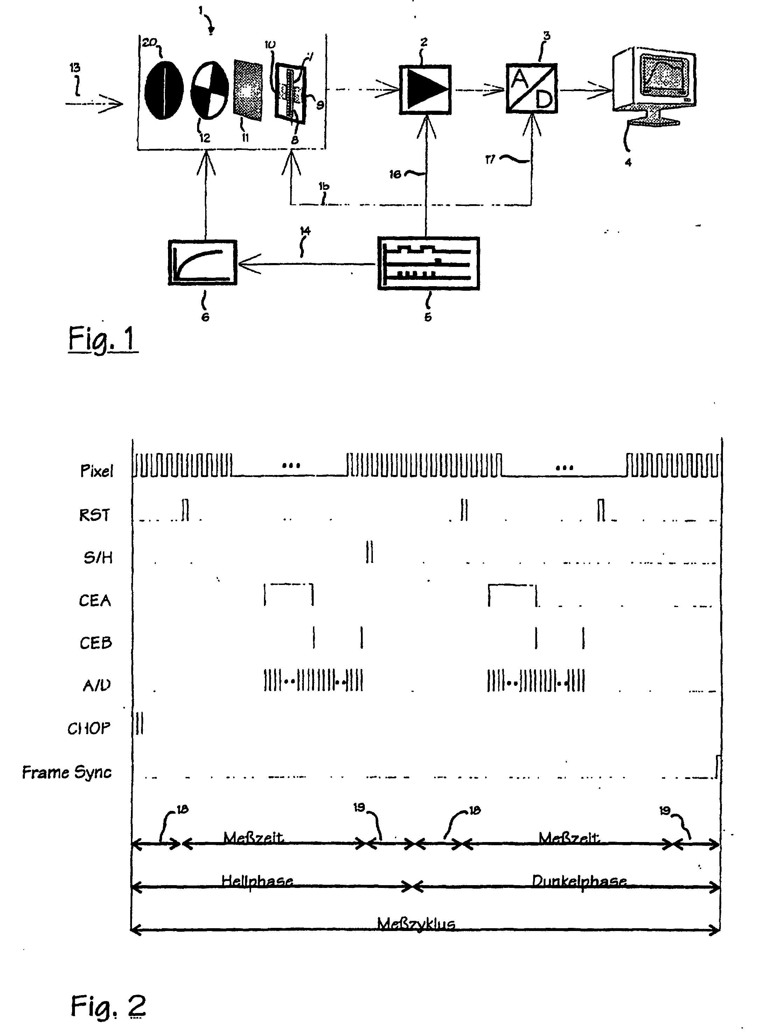

Fig. 1 zeigt eine schematische Darstellung des gesamten Spektrometers mit einem Detektor, einer Signalverarbeitungseinheit 2, einem A/D-Wandler 3, einem zur Verarbeitung von Meßwerten und zur Darstellung der Meßergebnisse dienenden Terminal 4, einer Steuereinheit 5 sowie einer Regeleinheit 6 für die Choppersynchronisation.

Der Detektor besteht aus zwei unmittelbar aneinandergereihten Detektorzeilen 7 und 8 mit je 32 hier nicht einzeln dargestellten PbS-Detektorelementen, die mittels zweier jeweils an eine Detektorzeile 7, 8 angeschlossener Multiplexerchips 9 und 10 sequentiell ausgelesen werden können, einem holographischen Transmissionsgitter 11 mit einer Gitterkonstanten von 1600 nm bis 2000 nm, sowie einem Chopper 12, der den durch den Pfeil 13 angedeuteten Strahlengang periodisch unterbricht. Der Strahlengang wird durch einen hier nicht dargestellten Lichtleiter bis zu einem optischen Spalt 20 geführt. der sich unmittelbar vor dem Chopper 12 befindet. Der Spalt begrenzt die Querschnittsfläche des Lichtstrahls derart, daß die Abmessungen eines durch das Transmissionsgitter am Ort der Detektorzeilen 7, 8 erzeugten Beugungsbildes des Spaltes den Abmessungen eines Detektorelementes entsprechen.

Die Spektralmessungen werden nicht absolut durchgeführt, sondern durch Bildung der Differenz zweier aufeinanderfolgender Spektren, die alternierend mit und ohne Beleuchtung aufgenommen werden. Hierfür müssen Phase und Frequenz des Choppers 12 und die Meßzeit zur Aufnahme der Spektren aufeinander abgestimmt werden. Diese Synchronisation von Meßzeit und der durch den Chopper 12 generierten Hell- und Dunkelphasen wird erreicht, indem die Steuereinheit 5 die jeweiligen zeitlichen Vorgaben macht, also Beginn und Ende der Meßzeiten sowie Frequenz und Phase des Choppers 12 vorgibt, und die Regeleinheit 6 den Chopperlauf entsprechend dieser Vorgaben einregelt. Somit folgt der Chopper 12 den vorgesehenen Meßzeiten, während bei üblichen Chopperkonfigurationen die Chopperfrequenz konstant vorgegeben ist und die Meßzeiten daran angepaßt werden müssen.

Für die Koordination der zeitlichen Abläufe im Spektrometer setzt die Steuereinheit 5, wie durch die Pfeile 14, 15, 16, 17 angedeutet, Signale, die in verschiedenen Spektrometerkomponenten 2, 3, 6, 9, 10 bestimmte Prozesse auslösen. Die Steuereinheit 5 besteht aus einer zentralen Karte, die die Zeitvorgaben verwaltet und die im wesentlichen aus zwei EPROM-Bausteinen mit je 16 Adress- und 8 Datenbits aufgebaut ist. Durch deren parallelen Betrieb sind 216 Bit-Zustände frei programmierbar, die die zeitliche Abfolge der digitalen Signale der entsprechenden Ausgangsleitungen repräsentieren. Diese Zustände werden mit einem intern erzeugten Takt von 1 MHz durchlaufen, wobei die Zustände durch einen Zähler bei 0 beginnend aufsteigend adressiert werden. Eine der 16 Ausgangsleitungen wird allein dafür verwendet, die Zähler zu einem bestimmten Zeitpunkt auf 0 zurückzusetzen. Das entsprechende Signal FRAME SYNC (s. Fig. 2) ermöglicht einen zyklischen Betrieb mit einstellbarer zeitlicher Periodendauer. Dieses Signal kann über eine Datenleitung gemeinsam mit den übrigen 15 frei programmierbaren Leitungen zur Ansteuerung des Choppers 12, der Signalverarbeitung 2 und des A/D-Wandlers 3 nach außen geführt werden, so daß diese Komponenten zueinander synchronisiert werden können.

Fig. 2 zeigt ein Beispiel der zeitlichen Abfolge der von der Steuereinheit 5 abgegebenen Signale. Ein Meßzyklus mit der durch das FRAME-SYNC-Signal gegebenen Periode umfaßt die Messung zweier kompletter Spektren: eines in der Hellphase und eines in der Dunkelphase. Somit werden stets aufeinanderfolgend ein Hellphasen- und ein Dunkelphasenspektrum gemessen. Die Periode eines Meßzyklus richtet sich im wesentlichen nach der Art und Weise der Bestimmung der Meßgröße. Üblicherweise wird zur Bestimmung der auf ein Detektorelement auftreffenden Strahlungsintensität an das Detektorelement eine konstante Spannung angelegt und während der Meßzeit ein in Reihe mit dem Detektorelement geschalteter Kondensator aufgeladen. Die in einem bestimmten Zeitintervall dort gesammelte Ladung ist abhängig von der Leitfähigkeit des Detektorelementes und somit von der dort auftreffenden Strahlungsintensität. Eine Meßzeit muß vor Erreichen einer Sättigung des Kondensators beendet sein. Im vorliegenden Fall wurden Meßzeiten zwischen 3 ms und 7 ms gewählt. Eine Meßzeit setzt immer erst nach Ablauf einer Anfangsreservezeit 18 nach Beginn der Hell- bzw. Dunkelphase ein und endet auch stets vor Beginn einer Endreservezeit 19 vor dem Ende der jeweiligen Phase. Hierdurch wird insbesondere gewährleistet, daß im Verlauf der Meßzeit auch tatsächlich das jeweilige Detektorelement vollständig abgedunkelt bzw- vollständig beleuchtet ist. Anfangsreservezeitraum 18 und Endreservezeitraum 19 machen hier beispielsweise zusammen in etwa 4% einer Dunkel- bzw. Hellphase aus, so daß ein Meßzyklus abhängig von der gewählten Meßzeit etwa zwischen 6 ms und 15 ms dauert. Hell- und Dunkelphasen sind als ideale Phasen zu verstehen, die ohne stationäre Regelabweichung und eine gewisse Restwelligkeit des Choppers 12 anzunehmen wären.

Der Chopper 12 wird über ein Signal CHOP angesprochen, das als Sollwert für die Regelung des Choppers 12 dient. Läuft der Chopper 12 im eingeschwungenen Zustand, wird der Strahlengang, zum Zeitpunkt der Aussendung der steigenden Flanke des CHOP-Signals geöffnet, so daß dann die Hellphase beginnt.

Der Beginn der Meßzeit ist gekennzeichnet durch eine steigende Flanke eines Signals RST. Das RST-Signal setzt die Detektorzeilenbeschaltung zurück, so daß eine neue zeitliche Integration über die Meßgröße an den einzelnen Detektorelementen gestartet wird.

Am Ende der Meßzeit bewirkt ein S/H-Signal, daß der momentane Wert der Meßgröße jedes Detektorelementes je einem hier nicht dargestellten sample-and-hold-Glied zugeführt und dort zwischengespeichert wird. Nach Zuführung der Meßgröße werden die sample-and-hold-Glieder von den zugehörigen Detektorelementen abgekoppelt, so daß letztere für die nächste Meßzeit zur Verfügung stehen.

Mit dem Rechtecksignal PIXEL werden z.B. mit 250 kHz die beiden Multiplexerchips 9,10 jeweils von einem sample-and-hold-Glied zum nächsten weitergesetzt. Das Hochsetzen der Signale CEA und CEB spricht jeweils einen der beiden Multiplexerchips 9,10 an und bewirkt, daß das momentan am Multiplexerchip 9,10 anliegende sample-and-hold-Glied ausgelesen werden kann. Mit der vorgenannten Frequenz werden die 32 sample-and-hold-Glieder je Detektorzeile 7,8 in einer Zeit von 0,128 ms ausgelesen. Diese Auslesung erfolgt jeweils in der Phase, die der die Meßwerte erzeugenden Meßzeit folgt. Nach ihrer Auslesung werden die Meßwerte verzögerungsfrei in einem nicht dargestellten Meßverstärker aufgearbeitet und liegen in Echtzeit am Eingang des A/D-Wandlers 3 an. Die Wandlung jedes einzelnen Meßwertes wird angeregt durch steigende Flanken des A/D-Signals, das ebenfalls von der Steuereinheit 5 generiert wird.

Die Vorgabe der Phase und der Frequenz des Choppers 12 über die Steuereinheit 5 geschieht mit dem Signal CHOP als Sollwert, dessen ansteigende Flanke den Zeitpunkt definiert, zu dem der Chopper 12 öffnen soll. Damit sind Frequenz und Phase des Choppers 12 eindeutig bestimmt. Als Istwert der Chopperregelung dient ein Signal SENSOR, das ein hier nicht dargestellter induktiver Näherungssensor liefert, der in der Nähe der Chopperscheibe fest montiert ist. Dieser Sensor wird, bezogen auf die Chopperscheibenachse, genau gegenüber dem Strahlengang angebracht. Somit entspricht die Phasenverschiebung zwischen Strahlengang und Sensor gerade einer halben Chopperscheibenumdrehung. Bei einer geraden Anzahl von Schlitzen in der Chopperscheibe gibt das Signal SENSOR somit direkt wieder, ob · Dunkelphase oder Hellphase vorliegt. Angesteuert wird der Chopper 12 mittels einer analogen Spannung USOLL in der Größenordnung von wenigen Volt, die auf den Eingang einer geeigneten Motoren-Ansteuerungskarte des Choppers 12 gelegt wird. Diese Karte steuert ihrerseits die Drehzahl eines kleinen hier nicht dargestellten Dreiphasenmotors, an dessen Welle die Chopperscheibe montiert ist.

Die Sollgröße CHOP und die Istgröße SENSOR werden auf eine zur Regeleinheit 6 gehörende Phasenkomparatorschaltung gegeben, die aus den ansteigenden Flanken dieser Signale ein positives oder negatives periodisches Rechtecksignal DELTA erzeugt, dessen Vorzeichen angibt, ob die aus der Motoren-Ansteuerungskarte, dem Dreiphasenmotor und der Chopperscheibe bestehende Regelstrecke zu schnell oder zu langsam läuft. Das Tastverhältnis ist ein Maß für die Phasenabweichung. Durch Tiefpaßfilterung wird der momentane Gleichanteil ermittelt und anschließend zur Stellgröße USOLL aufintegriert. Bei dem Prinzip dieser Regelung handelt es sich um die bekannte Nachlaufsynchronisation.

Die Scheibe des Choppers 12 ist zweigeteilt, so daß während einer Umdrehung der Chopperscheibe zwei Meßzyklen durchlaufen werden. Um den Einfluß mechanischer Fertigungsungenauigkeiten der Scheibe auf die Regelung auszublenden, wurde an beiden Eingängen der Regeleinheit 6 ein Frequenzhalbierer eingebaut, der dafür sorgt, daß nur jedes zweite der CHOP- und SENSOR-Signale zur Auswertung gelangt. Dadurch wird immer dieselbe Kante des Choppers 12 beobachtet.

Sobald und solange sich der Chopper 12 im eingeschwungenen Zustand befindet, wird dies der Steuereinheit 5 durch Hochsetzen eines Signals LOCKED gemeldet. Solange dieses Signal nicht hochgesetzt ist, wird die Datenübergabe an das Terminal 4 unterbunden, so daß erst dann Spektren ausgewertet werden, wenn die Synchronisation der Chopperphasen mit den Meßzeiten gewährleistet ist. Das Signal LOCKED wird aus dem vom Phasenkomparator erzeugten DELTA-Signal gewonnen.

## Patentansprüche

1. Spektroskopieverfahren unter Verwendung eines Detektors in Form eines linearen Arrays von Detektorelementen, die aus einem fotoleitfähigen Halbleitermaterial hergestellt sind, wobei
- von einer Probe kommende Strahlung spaltförmig begrenzt wird, spektral zerlegt wird, mit dem so erhaltenen Spektrum der Detektor beleuchtet und unter Ausnutzung der Abhängigkeit der Leitfähigkeit des Halbleitermaterials von der Strahlungsintensität ausgewertet wird,
- zur Erzeugung von Dunkelphasen und Hellphasen der Strahlengang zwischen Probe und Detektor mittels eines Choppers periodisch unterbrochen wird,
- mind. ein Meßzyklus durchgeführt wird, wobei ein Meßzyklus die Messung eines kompletten Spektrums in einer Hellphase und eines kompletten Spektrums in einer benachbarten Dunkelphase umfaßt und die Meßwerte einer von der Leitfähigkeit der Detektorelemente des Detektors eindeutig abhängigen Meßgröße sowohl während der Dunkelphase als auch während der Hellphase in jeweils einer Meßzeit bestimmt werden,
- aus dem Vergleich der in einer Hellphase bestimmten Meßwerte mit den in der Dunkelphase bestimmten Meßwerten die Intensität der in der Hellphase auf den Detektor auftreffenden Strahlung ermittelt wird,
- die Strahlungsunterbrechung und die Meßzeiten so zueinander synchronisiert werden, daß eine Meßzeit entweder nur innerhalb einer Hellphase oder nur innerhalb einer Dunkelphase liegt und
- die Meßzeit variabel und einstellbar ist, die Unterbrechung des Strahlengangs in Abhängigkeit von der Meßzeit eingeregelt wird und erst dann ein Spektrum ausgewertet wird, wenn die Synchronisation der Phasen des Choppers mit den Meßzeiten gewährleistet ist.

2. Verfahren nach Anspruch 1, wobei jede Meßzeit frühestens nach Ablauf eines bestimmten Anfangsreservezeitraumes nach Einsetzen einer Hell- bzw. Dunkelphase des Choppers beginnt und spätestens vor Beginn eines bestimmten Endreservezeitraumes vor Ende der Hell- bzw. Dunkelphase des Choppers endet.

3. Verfahren nach Anspruch 1, wobei zur Synchronisation der Unterbrechung des Strahlengangs mit den Meßzeiten Frequenz und Phase des Choppers sowie die Anfangs- und Endzeitpunkte der Meßzeiten durch eine Steuereinheit (5) vorgegeben werden.

4. Verfahren nach Anspruch 1, wobei nach Ablauf der Meßzeit der Meßwert jedes Detektorelements zunächst einem sample-and-hold-Glied zugeführt und dort zwischengespeichert und die sample-and-hold-Glieder später sequentiell ausgelesen werden, insbesondere die Zeitpunkte der sequentiellen Auslesung der einzelnen sample-and-hold-Glieder von der Steuereinheit (5) vorgegeben werden.

5. Spektrometer zur Durchführung des Verfahrens nach einem der Ansprüche 1 bis 4, mit
- einer Spektraleinheit (11) zur spektralen Zerlegung der von einer Probe ausgehenden Strahlung,
- einem Detektor in Form eines linearen Arrays von Detektorelementen (7, 8), die aus einem fotoleitfähigen Halbleitermaterial hergestellt sind,
- einem zwischen Probe und Detektor befindlichen, den Strahlengang periodisch unterbrechenden und damit auf dem Detektor Hell- und Dunkelphasen erzeuganden, mechanischen Chopper (12), und
- einer Phase und Frequenz des Choppers (12) sowie Beginn und Ende jeder Meßzeit vorgebenden Steuereinheit (5), die so ausgelegt ist, daß

6. Spektrometer nach Anspruch 5, mit einem im Strahlengang vor der Spektraleinheit (11) befindlichen, als Blende dienenden optischen Spalt, dessen Flächenmaß vorzugsweise nicht größer als das entsprechende Flächenmaß des Detektors ist.

7. Spektrometer nach Anspruch 5, mit einem die Phase des Choppers (12) feststellenden Sensorelement, das insbesondere als ein induktiver Näherungssensor oder als eine Reflexlichtschranke ausgebildet ist.

8. Spektrometer nach Anspruch 5, wobei das fotoleitfähige Halbleitermaterial PbS oder PbSe ist.

9. Spektrometer nach Anspruch 5, mit mindestens einem zur sequentiellen Auslesung der Meßgwerte der einzelnen Detektorelemente dienenden Multiplexer (9, 10).

10. Spektrometer nach Anspruch 5, wobei jedem Detektorelement ein zur Zwischenspeicherung eines Meßwertes dienendes sample-and-hold-Glied zugeordnet ist.

11. Spektrometer nach Anspruch 5, wobei es einen zwischen Probe und Chopper (12) den Strahleneingang führenden Lichtleiter aufweist.

## Claims

1. A method for spectroscopy by using a detector in the shape of a linear array of detector elements, which are made of a photoconductive semiconductor material, whereby
- the radiation deriving from a sample is limited like a slit, is analyzed in a spectral way, and the detector is illuminated with the spectrum received in such a way and evaluated by using the dependency of the conductivity of the semiconductor material of the intensity of the radiation,
- for producing phases of darkness and phases of brightness, the path of the rays is periodically interrupted between the sample and the detector by means of a chopper,
- at least one measuring cycle is performed, whereby the measuring cycle consists of a measurement of a complete spectrum in a phase of brightness and a complete spectrum in a neighboring phase of darkness and the measured values of a quantity to be measured, definitely dependent on the conductivity of the detector element of the detector, during the phase of darkness as well as during the phase of brightness are determined in a gate time each,
- from the comparison of the measured values determined in a phase of brightness and those measured values determined in a phase of darkness, the intensity of the radiation, meeting the detector in a phase of brightness,
- the interruption of the radiation and the gate times are synchronized to each other in such a way that a gate time lies only either within a phase of brightness or only within a phase of darkness and
- the gate time is variable and adjustable, the interruption of the path of the rays is regulated in dependency to the gate time and a spectrum is only evaluated, when the synchronization of the phases of the chopper is guaranteed with the gate times.

2. The method according to claim 1, wherein each gate time starts at the earliest after a certain initial spare time has run out after a phase of brightness or darkness respectively has begun and at the latest ends before a certain final spare time has begun before the end of the phase of brightness or darkness of the chopper.

3. The method according to claim 1, wherein for the synchronization of the interruption of the path of the rays, with the gate times the frequency and the phase of the chopper are determined as well as the starting and finishing points in time of the gate times by a control electronics device (5).

4. The method according to claim 1, wherein after the gate time has run out the measured value of each detector element is lead to a sample-and-hold circuit initially and is stored there temporarily and the sample-and-hold circuits are later selected in a sequential way, especially that the points in time of the sequential selection of the individual sample-and-hold circuits are dictated by the control electronics device (5).

5. A spectrometer for using the method according to one of the claims 1 to 4, comprising with
- a spectral unit (11) for the spectral analysis of the radiation deriving from a sample,
- a detector in the shape of a linear array of detector elements (7,8), which are made of a photoconductive semiconductor material,
- a mechanical chopper (12), positioned between sample and detector, periodically interrupting the path of the radiation and therefore producing phases of brightness and darkness on the detector and,
- a control unit (5) defining a phase and a frequency of the chopper (12) as well as the start and an end of each gate time, which control unit (5) is structured in such a way that the gate time is variable and adjustable, the interruption of the path of the rays is regulated in dependency to the gate time and a spectrum is only evaluated, when the synchronization of the phases of the chopper is guaranteed with the gate time.

6. The spectrometer according to claim 5 comprising an optic slit, positioned in front of the spectral unit (11) in the path of the rays, serving as an optical operature, whose measure of superficies is preferably not larger than the respective measure of superficies of the detector.

7. The spectrometer according to claim 5 comprising a sensor element, determining the phase of the chopper (2), formed especially as an inductive approximation sensor or as a reflex light barrier.

8. The spectrometer according to claim 5, wherein the photoconductive semiconductor material is PbS or PbSe.

9. The spectrometer according to claim 5 comprising at least one multiplexer (9, 10) serving the purpose of the sequential selection of the measured values of the individual detector element.

10. The spectrometer according to claim 5 comprising each detector is allocated to element sample-and-hold circuit, serving the temporary storage of a measured value.

11. The spectrometer according to claim 5, wherein a light guide is provided for guiding the radiation between probe and chopper (12).

## Revendications

1. Procédé de spectroscopie en utilisant un détecteur sous forme d'un array linéaire d'éléments détecteurs qui sont fabriqués d'une matière semi-conductrice photoconductrice, dans lequel
- la radiation venant d'un échantillon est limitée par une fente, est analysée de façon spectrale, le détecteur est illuminé avec le spectre reçu de cette manière et ce dernier est évalué en utilisant la dépendance de la conductibilité de la matière semi-conductrice de l'intensité de la radiation,
- pour la génération de phases d'obscurité et de phases éclairées, la marche des rayons entre l'échantillon et le détecteur est interrompue périodiquement au moyen d'un interrupteur (chopper),
- du moins un cycle de mesurage est effectué, un cycle de mesurage comprenant la mesure d'un spectre complet dans une phase éclairée et d'un spectre complet dans une phase voisine d'obscurité et les valeurs mesurées d'une grandeur mesurée dépendant clairement de la conductibilité des éléments détecteurs du détecteur étant déterminées aussi bien durant la phase d'obscurité que durant la phase éclairée dans respectivement un temps de mesure,
- l'intensité de la radiation qui rencontre le détecteur dans la phase éclairée est déterminée de la comparaison entre les valeurs mesurées déterminées dans une phase éclairée et les valeurs mesurées déterminées dans la phase d'obscurité,
- l'interruption de la radiation et les temps de mesure sont synchronisés l'un par rapport à l'autre de telle manière qu'un temps de mesure se trouve soit seulement à l'intérieur d'une phase éclairée soit seulement à l'intérieur d'une phase d'obscurité, et
- le temps de mesure est variable et réglable, l'interruption de la marche des rayons est réglée en fonction du temps de mesure et un spectre n'est évalué que lorsque la synchronisation des phases du chopper avec les temps de mesure est garantie.

2. Procédé selon la revendication 1, dans lequel chaque temps de mesure commence au plus tôt après l'écoulement d'un certain temps initial de réserve après le commencement d'une phase éclairée ou bien d'une phase d'obscurité du chopper et se termine au plus tard avant le commencement d'un certain temps final de réserve avant la fin de la phase éclairée ou bien de la phase d'obscurité du chopper.

3. Procédé selon la revendication 1, dans lequel, pour la synchronisation de l'interruption de la marche des rayons avec les temps de mesure, la fréquence et la phase du chopper ainsi que les moments initial et final des temps de mesure sont donnés par une unité de commande (5).

4. Procédé selon la revendication 1, dans lequel, après l'écoulement du temps de mesure, la valeur mesurée de chaque élément détecteur est amenée d'abord à un circuit sample-and-hold et y est mémorisée temporairement et les circuits sample-and-hold sont lus plus tard de manière séquentielle, en particulier les moments de la lecture séquentielle des circuits sample-and-hold individuels sont donnés par l'unité de commande (5).

5. Spectromètre pour la mise en oeuvre du procédé selon l'une des revendications 1 à 4, comprenant
- une unité spectrale (11) pour l'analyse spectrale de la radiation provenant d'un échantillon,
- un détecteur sous forme d'un array linéaire d'éléments détecteurs (7, 8) qui sont fabriqués d'une matière semi-conductrice photoconductrice,
- un chopper mécanique (12) situé entre l'échantillon et le détecteur, interrompant périodiquement la marche des rayons et générant ainsi des phases éclairées et d'obscurité sur le détecteur, et
- une unité de commande (5) définissant la phase et la fréquence du chopper (12) ainsi que le début et la fin de chaque temps de mesure, ladit unité de commande étant conçue de telle manière que le temps de mesure est variable et réglable, que l'interruption de la marche des rayons est réglée en fonction du temps de mesure et qu'un spectre n'est évalué que lorsque la synchronisation des phases du chopper avec les temps de mesure est garantie.

6. Spectromètre selon la revendication 5, avec une fente optique qui se trouve dans la marche des rayons devant l'unité spectrale (11) et qui sert d'ouverture et dont la mesure de superficie, de préférence, n'est pas plus grande que la mesure correspondante de superficie du détecteur.

7. Spectromètre selon la revendication 5, avec un élément détecteur qui constate la phase du chopper (12) et qui, en particulier, est réalisé comme détecteur inductif de proximité ou comme barrage photoélectrique réflexe.

8. Spectromètre selon la revendication 5, dans lequel la matière semi-conductrice photoconductrice est du PbS ou PbSe.

9. Spectromètre selon la revendication 5, avec du moins un multiplexeur (9, 10) servant à la lecture séquentielle des valeurs mesurées des éléments détecteurs individuels.

10. Spectromètre selon la revendication 5, dans lequel un circuit sample-and-hold servant à la mémorisation temporaire d'une valeur mesurée est associé à chaque élément détecteur.

11. Spectromètre selon la revendication 5, présentant un guide de lumière qui guide la marche des rayons entre l'échantillon et le chopper (12).
